# EUROPEAN PATENT APPLICATION

(11) **EP 1 033 879 A1**
(43) Date of publication of application: **06.09.2000**
(21) Application number: 98943053.3
(22) Date of filing: 18.09.1998
(51) Int. Cl.: H04N 7/15, H04N 5/232

(54) **CAMERA CONTROL SYSTEM**

(71) Applicant: MITSUBISHI DENKI KABUSHIKI KAISHA, Tokyo 100-8310 (JP)
(72) Inventor: ASHIDA, Yasushi, Mitsubishi Denki K. Kaisha, Tokyo 100-8310 (JP)
(74) Representative: Pfenning, Meinig & Partner GbR
(86) International application number: JP9804224
(87) International publication number: WO0018121

(57) **Abstract**

A camera control system wherein, when a distant camera control is started, the control is performed through procedures comprising: a first processing group (steps 502-505) which, until the "zoom" button is depressed, directly controls the distant camera to determine the shooting position; a second processing group (steps 506-507) which, until the "set" button is depressed, sets the shooting position and the shooting range according to a picture plane frame on the monitor to which a picture from the distant camera is output; a third processing group (steps 508-509) which outputs on the monitor the shooting position and the shooting range of the distant camera set by the second processing group; and a fourth processing group (steps 510-511) which, until the "set" button is depressed, directly operates the distant camera to adjust the shooting position and shooting range. This process simplifies the processing sequence of control of the distant camera and improves the operability.

## Description

### TECHNICAL FIELD

The present invention relates to a camera control device used for a television conference system. More particularly, the present invention relates to a camera control device capable of controlling a photographing position and photographing range of a camera of a remote station from a local station.

### BACKGROUND ART

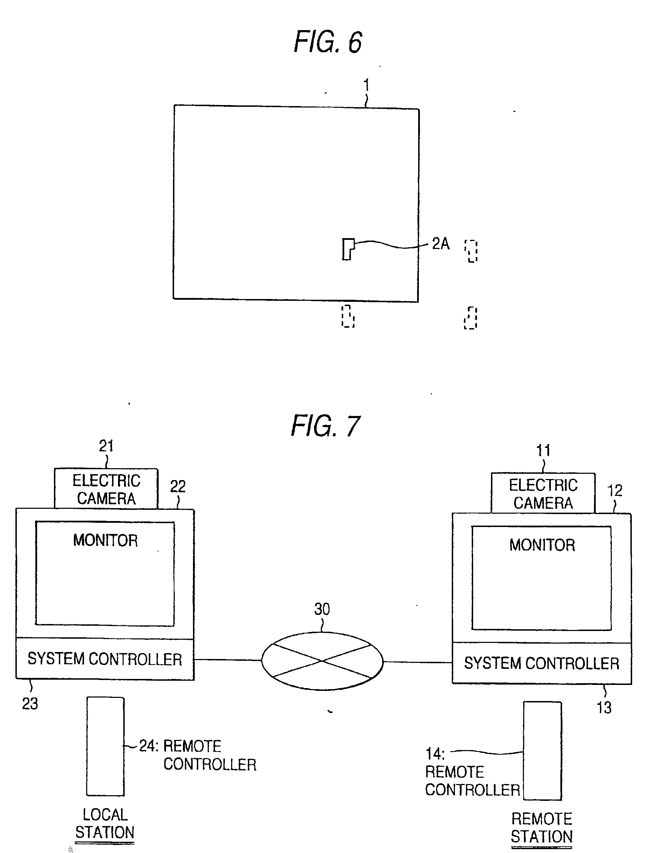

Referring to Figs. 7 to 11, the conventional camera control device used for a television conference system will be explained below. Fig. 7 is an arrangement view showing a television conference system in which a conventional camera control device, which is disclosed in Japanese Unexamined Patent Publication No. 9-37176, is used.

In the drawing, reference numeral 11 is an electric camera of a remote station composed of a rotational stand and a camera having a zoom lens and an automatic focusing function, and reference numeral 21 is an electric camera of a local station composed of a rotational stand and a camera having a zoom lens and an automatic focusing function. Reference numeral 12 is a monitor of the remote station, and reference numeral 22 is a monitor of the local station. Reference numeral 13 is a system controller of the remote station for controlling the electric camera 11 of the remote station and the electric camera 21 of the local station and also for compressing and transmitting or receiving and expanding an image sent from the camera 11 of the remote station and an image sent from the electric camera 21 of the local station, and reference numeral 23 is a system controller of the local station for controlling the electric camera 21 of the local station and the electric camera 11 of the remote station and also for compressing and transmitting or receiving and expanding an image sent from the camera 21 of the local station and an image sent from the camera 11 of the remote station. Reference numeral 14 is a remote controller for controlling the system controller 13 of the remote station, and reference numeral 24 is a remote controller for controlling the system controller 23 of the local station. Reference numeral 30 is a transmission line composed of ISDN, for example.

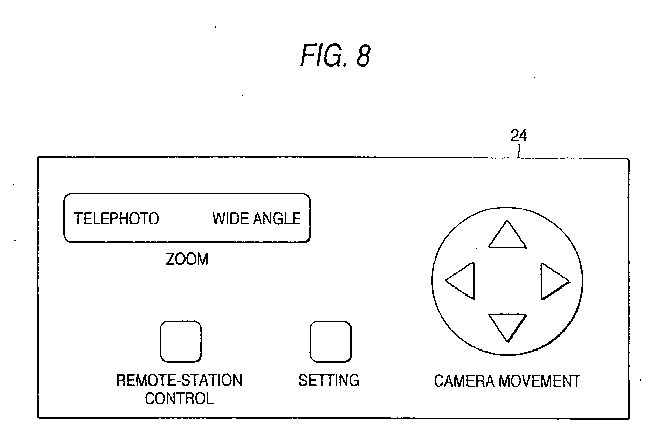

Fig. 8 is an arrangement view of the remote controller 24 of the local station shown in Fig. 7. The remote controller 24 of the local station includes "a zooming button", "a remote station controlling button", "a camera moving button" and "a setting button". In this connection, the remote controller 14 of the remote station has the same arrangement as that of the local station's remote controller 24. In this case, "the remote station controlling button" has a function of selecting either the electric camera 21 of the local station or the electric camera 11 of the remote station when an object to be controlled by "the zooming button" and "the camera moving button" is determined.

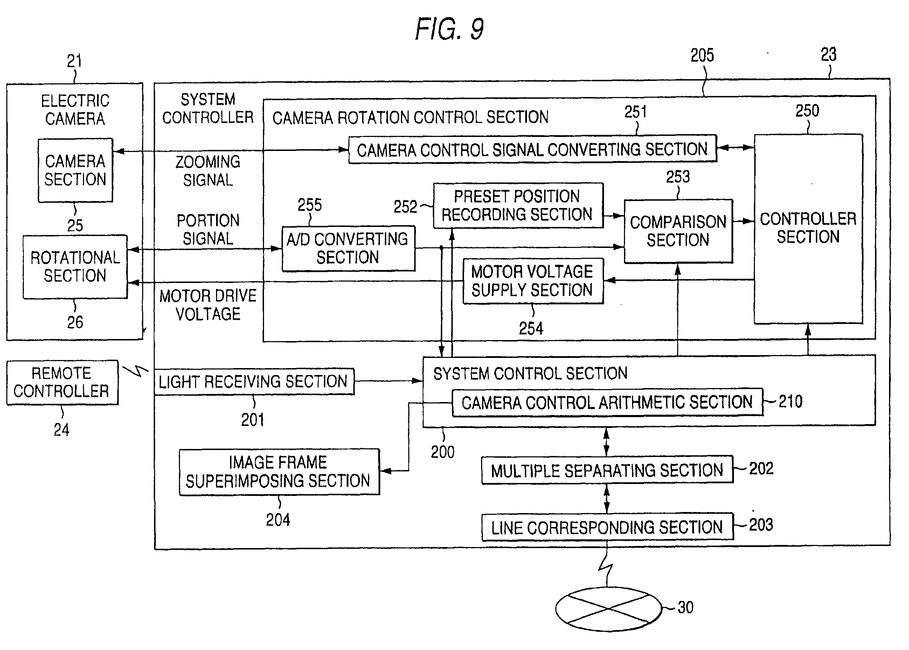

Fig. 9 is an arrangement view showing the system controller 23 of the local station shown in Fig. 7. In this connection, the arrangement of the system controller 13 of the remote station is the same as that of the system controller 23 of the local station. Both system controllers are capable of controlling the electric camera 11 of the remote station and the electric camera 21 of the local station.

In Fig. 9, reference numeral 25 is a camera section of the electric camera 21 of the local station, and reference numeral 26 is a rotational section of the electric camera 21 of the local station in which, for example, a servo motor is used. Reference numeral 200 is a system controlling section. Reference numeral 201 is a light receiving section which receives control data sent from the remote controller 24 of the local station. Reference numeral 202 is a multiple separating section for conducting a multiple separation of images, voices and data. Reference numeral 203 is a line corresponding section for receiving data from the transmission line 30 and sending data to the transmission line 30. Reference numeral 204 is a screen frame superimposing section for outputting a screen frame onto the monitor 22 of the local station when a photographing position and a photographing range of the electric camera 11 of the remote station are controller by the system controller 23 of the local station. Reference numeral 205 is a camera rotation controlling section.

Reference numeral 250 is a controller section for controlling the overall camera rotation controlling section 205. Reference numeral 251 is a camera control signal converting section for converting a signal sent between the controller section 250 and the camera section 25. Reference numeral 252 is a preset position recording section for temporarily recording preset positional data of the electric camera 21 of the local station which is indicated to the system controlling section 200 by the remote station via the transmission line 30. Reference numeral 255 is an A/D converting section for converting analog positional data, which is outputted from the rotational section 26 by a potentiometer (not shown), into digital positional data. Reference numeral 253 is a comparison section for comparing preset positional data, which is recorded in the preset position recording section 252, with positional data sent from the A/D converting section 255. Reference numeral 254 is a motor voltage supplying section for supplying a motor drive voltage to the rotational section 26 according to the result of the comparison conducted by the comparing section 253. Reference numeral 210 is a camera control arithmetic section for calculating a value used for indicating a superimposing position, at which the image frame is superimposed, to the screen frame superimposing section 204.

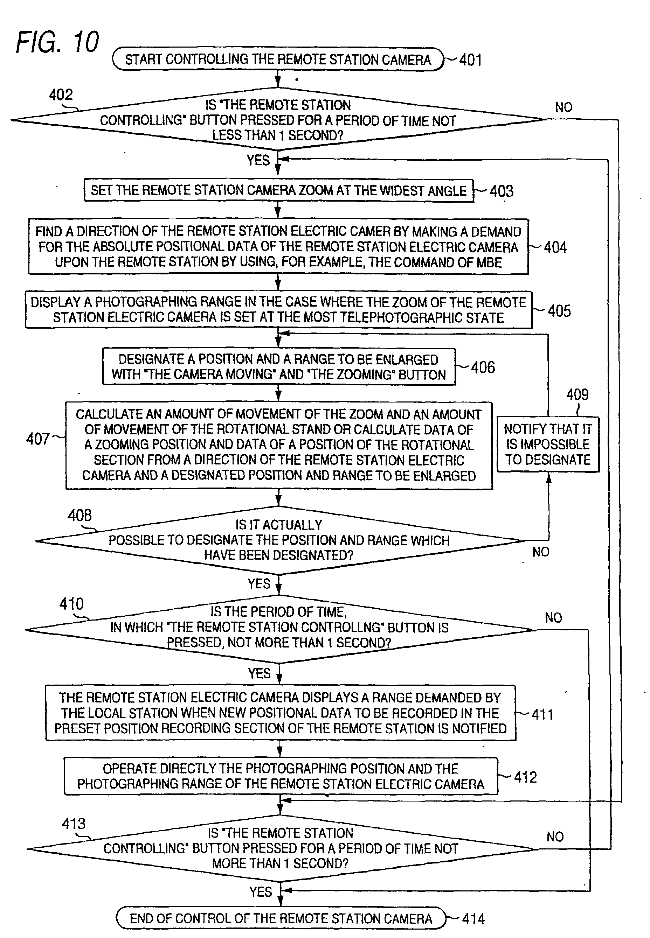

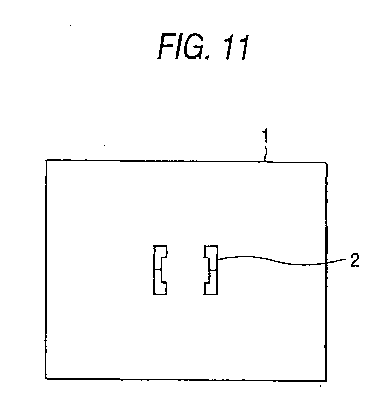

Fig. 10 is a flow chart showing a conventional controlling operation in which the system controller 23 of the local station conducts a controlling operation on the electric camera 11 of the remote station. Fig. 11 is a schematic illustration for explaining an operation of the screen frame used for controlling the electric camera 11 of the remote station. Reference numeral 1 is a screen of the monitor 22 of the local station. Reference numeral 2 is a screen frame in which the screen frame superimposing section 204 is displayed.

Next, referring to Figs. 7 to 11, the operation will be explained as follows. The conventional television conference system is arranged as shown in Fig. 7, in which a television conference is held when image and voices are exchanged between the local station and the remote station via the transmission line 30. In this case, a television conference terminal for having communication with the remote controller 24 of the local station is defined as a terminal of the local station, and a television conference terminal for having communication with the remote controller 14 of the remote station is defined as a terminal of the remote station. Images photographed by the electric camera 11 of the remote station and the electric camera 21 of the local station are outputted onto the monitor 12 of the remote station or the monitor 22 of the local station by the operation conducted by the remote controller 14 of the remote station or the remote controller 24 of the local station. All data of images and voices are compressed, expanded and transmitted by the system controller 13 of the remote station or the system controller 23 of the local station.

The remote controller 24 of the local station is composed as shown in Fig. 8. "The remote station controlling" button sets either the local station or the remote station so that the local station or the remote station can be controlled by the remote controller 24 of the local station. That is, when "the remote station controlling" button is invalid, the remote controller 24 of the local station controls the electric camera 21 of the local station, and when "the remote station controlling" button is valid, the remote controller 24 of the local station controls the electric camera 11 of the remote station. In other word, when "the remote station controlling" button is invalid, a direction and a magnification of zooming of the electric camera 21 of the local station are controlled by "the zooming" button and "the camera moving" button, and when "the remote station controlling" button is valid, a direction and a magnification of zooming of the electric camera 11 of the remote station are controlled by "the zooming" button and "the camera moving" button. "The setting button" is used for finally determining various setting information described later.

Next, referring to Fig. 9, controlling operation of the electric camera 21 of the local station conducted by the system controller 23 of the local station will be explained as follows. The camera rotation controlling section 205 is controlled by a control signal sent from the system controlling section 200, and a zooming signal is sent to the camera section 25 via the camera controlling signal converting section 251. A motor drive voltage is impressed upon the rotational section 26 via the motor voltage supplying section 254.

In the preset position recording section 252, preset position data is recorded in the form of an absolute value according to a direction given by the system control section 200 of the local station or the remote station. Preset operation is conducted on the electric camera 21 of the local station as follows. Data of the present position of the rotational section 26, which is sent from the A/D converting section 255, and preset position data recorded in the preset position recording section 252 are compared with each other by the comparing section 253, and preset operation is conducted so that both data can coincide with each other. Preset position data can be rewritten at any time. Concerning the zooming preset control of the electric camera 21 of the local station, all operation is controlled by the zoom controlling mechanism (not shown) housed in the camera section 25.

Into the system controlling section 200, positional data of an absolute value is inputted by the A/D converting section 255 at all times. The system controlling section 200 outputs a rotational moving command to the motor voltage supplying section 254 via the controller 250 in accordance with a period of time of pressing "the camera moving" button of the remote controller 24 of the local station. Due to the foregoing, the motor voltage supplying section 254 supplies a motor driving voltage corresponding to the inputted rotational moving command to the rotational section 26, so that the rotational section 26 can be driven. In this connection, controlling operation conducted on the electric camera 11 of the remote station by the system controller 13 of the remote station is the same as that conducted on the electric camera 21 of the local station by the system controller 23 of the local station. Therefore, explanations are omitted here. Next, operation will be explained as follows when the system controller 23 of the local station controls the electric camera 11 of the remote station. The screen frame 2 used for conducting remote control on the electric camera 11 of the remote station is indicated to the screen frame superimposing section 204 according to the result of the calculation conducted in the camera control arithmetic section 210. Then the screen frame 2 is displayed on the screen 1 of the monitor 22 of the local station as shown in Fig. 11.

Control information, image signals and voice signals are subjected to multiple separation in the multiple separating section 202, and correspondence is mutually conducted via the line corresponding section 203 and the transmission line 30.

When an operator (not shown in the drawing) operates "the remote station controlling" button arranged in the remote controller 24 of the local station so that remote station control can be made valid, as shown in Fig. 10, controlling operation to control the camera of the remote station is started in the system controlling section 200 (step 401), and the program proceeds to step 402. In step 402, the system controlling section 200 judges whether or not "the remote station controlling" button is pressed for a period not less than one second. When "the remote station controlling" button is pressed for a period not less than one second, the program proceeds to step 403, and when "the remote station controlling" button is not pressed for a period not less than one second, the program proceeds to step 412.

In step 403, for example, according to the command of MBE (Multi Byte Extension) stipulated by the advice of ITU-H.221, it is demanded to the system controller 13 of the remote station that the electric camera 11 of the remote station is made to be the widest angle, and then the program proceeds to step 404. Due to the foregoing, an image of the widest angle photographed by the electric camera 11 of the remote station is outputted onto the monitor 22 of the local station. In step 404, the positional data of the electric camera 21 of the remote station, which is expressed by absolute values, held by the system controlling section of the system controller 13 of the remote station is demanded to the system controller 13 of the remote station by the command of MBE. Due to the above operation, the positional data of the electric camera 11 of the remote station can be known, and the program proceeds to step 405. In step 405, a photographing range is displayed in the case where the electric camera 11 of the remote station is set in the most telephotographic condition by the screen frame superimposing section 204, for example, as shown by the screen frame 2 in Fig. 11, and the program proceeds to step 406.

In step 406, when "the zooming" button and "the camera moving" button in the remote controller 24 of the local station are pressed, the system controlling section 200 moves and reduces/extends the image frame 2. Therefore, a photographing position and a photographing range, which are desired by the operator, are designated on the image outputted on the screen 1 photographed by the electric camera 11 of the remote station.

In this connection, when the operator wants to photograph a portion except for the image (photographing range) sent from the electric camera 11 of the remote station, for example, the screen frame 2 is continuously moved to a direction in accordance with the desire of the operator. In the case where the system controlling section 200 detects that "the camera moving" button is still pressed even after the screen frame 2 has been moved to a corner of the screen 1, an amount of movement corresponding to an amount of pressing "the camera moving" button is notified to the system controller 13 of the remote station, for example, by the command of MBE, so that the rotational section of the electric camera 11 of the remote station can be rotated and the photographing position of the electric camera 11 of the remote station can be moved. In this case, positional data of the electric camera 11 of the remote station after the rotational section has been rotated is inputted from the system controller 23 of the remote station and renewed.

In step 407, in the system controlling section 200, the camera control arithmetic section 210 calculates an amount of zooming movement of the electric camera of the remote station and the new positional data to be directed to the system controller 13 of the remote station, from the photographing range of the screen frame 2 designated in step 406, and the program proceeds to step 408. In step 408, it is judged whether or not the designated photographing range can be actually photographed by the electric camera 11 of the remote station. When the designated photographing range can be actually photographed by the electric camera 11, the program proceeds to step 410, and when the designated photographing range can not be actually photographed by the electric camera 11, the program proceeds to step 409.

In step 409, the system controlling section 200 displays characters and others on the screen 1 and notifies the operator that designation of the photographing position and photographing range conducted in step 407 can not be conducted, and the program proceeds to step 406. In step 410, a period of time of pressing "the remote station control" is judged. When the pressing time is not more than one second, the program proceeds to step 411. When the pressing time is more than one second, the program proceeds to step 414, and the operation is completed. In step 411, arithmetic values obtained in step 407 (an amount of the movement of zooming and new positional data to be recorded in the preset position recording section in the system controller 13 of the remote station) are notifies to the system controller 13 of the remote station. Due to the foregoing, the zooming motion and the rotational motion of the electric camera 11 of the remote station are conducted, and the program proceeds to step 412.

Due to the foregoing, an image is outputted which is photographed by the electric camera 11 of the remote station corresponding to the photographing position and the photographing range designated in step 406. In step 412, the system controlling section 200 uses "the zooming" button and "the camera moving" button and directly operates the electric camera 11 of the remote station by the correspondence with the system controller 13 of the remote station conducted by the command of MBE, so that the photographing position and the photographing range can be adjusted. In the case where "the remote station control" button is pressed in the operation of step 412, the program proceeds to step 413. In step 413, a period of time of pressing "the remote station control" button is judged. When the period of time of pressing "the remote station control" button is not more than one second, the program proceeds to step 414. When the period of time of pressing "the remote station control" button is more than one second, the program proceeds to step 403.

The electric camera 11 of the remote station is controlled by the remote controller 24 of the local station as described above. Therefore, the photographing position and the photographing range of the electric camera 11 of the remote station can be adjusted by the remote controller 24 of the local station.

Since the conventional camera control device is composed as described above, the following problems may be encountered.
(1) The system controlling section 200 in the system controller 23 of the local station controls the electric camera 11 of the remote station as shown in Fig. 10. In this case, after the control of the electric camera 11 of the remote station has been made valid by "the remote station control" button, the next operation step branches according to the period of time of pressing "the remote station control" button. Therefore, it is difficult for a beginner to use the device, and it takes time for him to become experienced in the device.
(2) For example, when the remote controller 24 of the local station controls a position of the electric camera 11 of the remote station in step 412, the system controller 23 of the local station makes correspondence with the system controller 13 of the remote station by the command of MBE, so that positioning control can be conducted. Therefore, a delay of transmission is caused by the transmission line 30 between the time at which the command of MBE arrives at the system controller 13 of the remote station and the time at which an image sent from the electric camera of the remote station is outputted onto the monitor 22 of the local station. Accordingly, it is difficult for the operator to adjust the photographing position and the photographing range as he likes. In this connection, the above problems are described in detail in the paragraph "0011" in the official gazette of Japanese Unexamined Patent Publication No. 9-37136.
(3) When the rotational section of the electric camera 11 of the remote station is rotated by the system controller 23 of the local station, the following operation must be performed. Positional data of absolute values must be inputted from the system controller 13 of the remote station, and new positional data obtained when an amount of the desired movement of the electric camera 11 of the remote station is added to or subtracted from the above positional data must be notified to the system controller 13 of the remote station. That is, it is necessary for the system controller 23 of the local station to conduct arithmetic operation for calculating the new positional data. Therefore, it takes time to conduct arithmetic operation. In order to conduct the above processing, correspondence in which the command of MBE is used must be made at least twice. Therefore, the processing becomes complicated.

### DISCLOSURE OF THE INVENTION

The present invention has been accomplished to solve the above problems. A first object of the present invention is to provide a camera control device, the operation property of which can be enhanced when an electric camera of a remote station is controlled by a local station. A second object of the present invention is to provide a camera control device by which a photographing range can be satisfactorily adjusted even when a delay of transmission is generated in the case of controlling an electric camera of a remote station by a local station. A third object of the present invention is to provide a camera control device in which the arithmetic operation of a photographing position of an electric camera of a remote station, which is conducted in a local station, can be simplified.

In order to accomplish the above objects, the present invention provides a camera control device comprising: a camera of a remote station for photographing a desired position and range so as to output a remote image; a system controller for compressing the remote image and transmitting it to a transmission line; a system controller of a local station for expanding the remote image transmitted via the transmission line; a monitor of the local station for displaying the remote image; a superimposing display section for displaying a screen frame capable of designating a photographing position and a photographing range of the camera of the remote station on the monitor of the local station; a local station side operating means for operating the camera of the remote station by the local station; and a remote station camera control means for controlling the camera of the remote station by the local station side operating means via the transmission line, wherein a first processing group for making a photographing range of the remote station camera to be the widest angle, a second processing group for moving the remote station camera according to a remote image of the widest angle displayed on the local station monitor by the first processing group, and a third processing group for designating the photographing position and the photographing range of the remote station camera by a screen frame displayed on the local station monitor in the photographing range of the remote station camera moved by the second processing group, are successively operated in order.

When the remote station camera control means designates a photographing position of the remote station camera, designation is made by a relative value of the photographing position of the remote station camera.

When the remote station camera is moved by the remote station camera control means by the second processing group, the remote station camera is moved by a predetermined amount each time the local station side operating means is operated.

A screen frame displayed by the remote station camera control means by the third processing group can be moved exceeding a screen of the local station monitor except for a predetermined portion.

Further, a screen frame is displayed by the remote station camera control means by the third processing group.

### BRIEF DESCRIPTION OF THE DRAWINGS

Fig. 1 is an arrangement view showing a television conference system in which the camera control device of the present invention is used.
Fig. 2 is an arrangement view showing the local station system controller shown in Fig. 1.
Fig. 3 is a flow chart showing a series of controlling operation conducted by the local station system controller shown in Fig. 1 on the remote station electric camera.
Fig. 4 is a schematic illustration showing a state in which a screen frame is set all over the screen.
Fig. 5 is a schematic illustration showing operation in the case where the photographing position of the remote station electric camera shown in Fig. 1 is moved by the correspondence control in which the command of MBE is used.
Fig. 6 is a schematic illustration showing an operating method of operating a screen frame displayed on a screen.

### BEST MODE FOR CARRYING OUT THE INVENTION

Examples of the present invention will be explained as follows.

### EXAMPLE 1

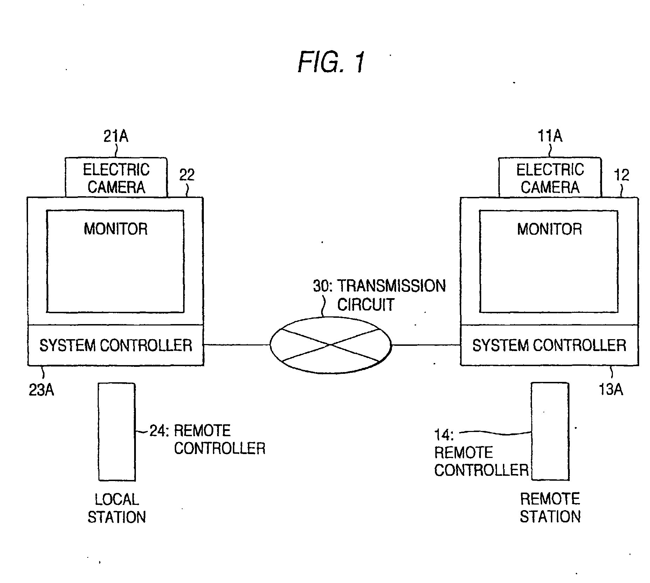

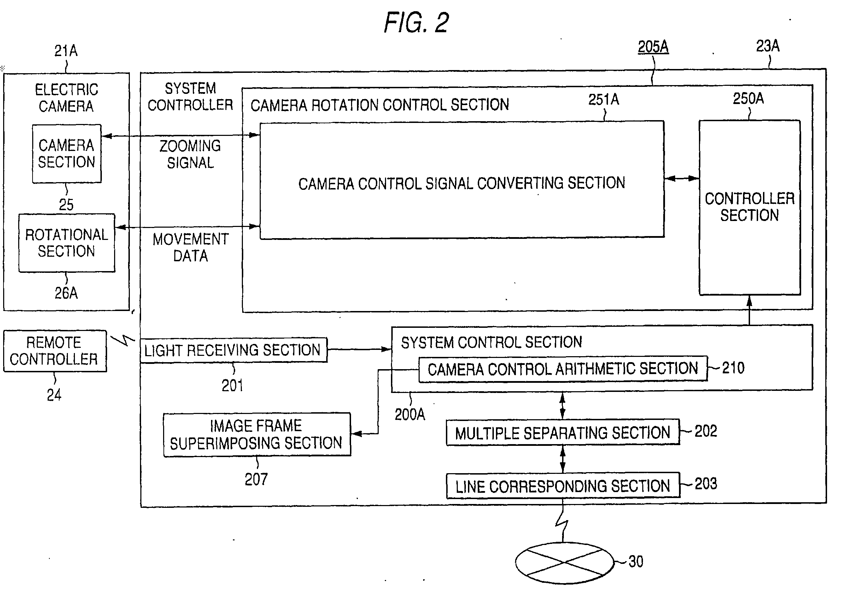

Fig. 1 is an arrangement view showing a television conference system in which the camera control device of the present invention is used. Like reference characters are used to indicate like parts in Figs. 1 and 7, and the explanations are omitted here. In Fig. 1, reference numeral 21A is a local station electric camera, reference numeral 11A is a remote station electric camera, reference numeral 23A is a local station system controller, and reference numeral 13A is a remote station system controller. Fig. 2 is an arrangement view showing the local station system controller 23A. Like reference characters are used to indicate like parts in Figs. 2 and 9, and the explanations are omitted here. In Fig. 2, reference numeral 200A is a system controlling section, reference numeral 205A is a rotation controlling section, reference numeral 250A is a controller section, and reference numeral 251A is a camera control signal converting section. Reference numeral 26A is a rotational section. For example, a stepping motor is used for the rotational section 26A.

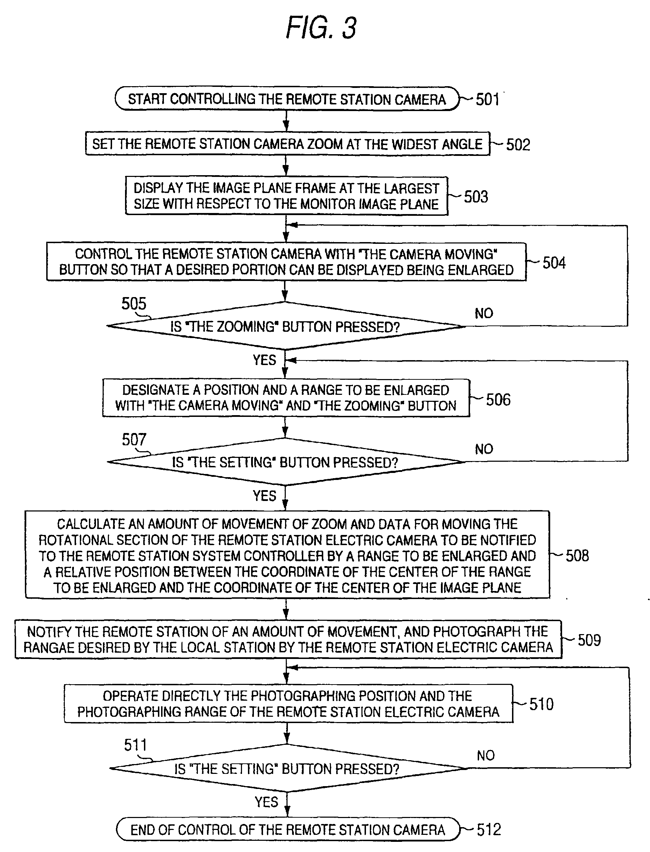

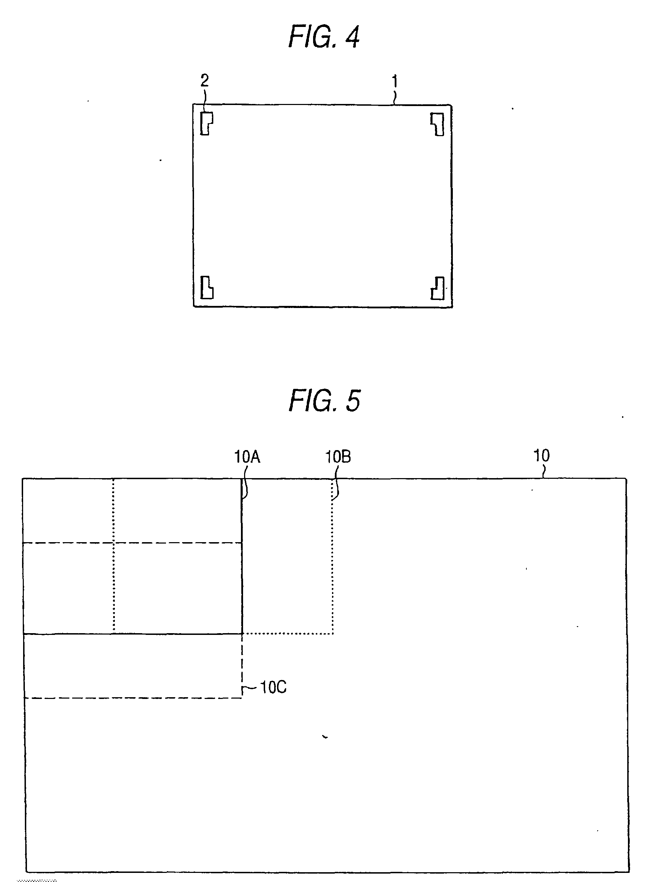

In this connection, an arrangement of the remote station system controller 13A is the same as that of the local station system controller 23A. Fig. 3 is a flow chart showing a series of controlling operation conducted by the local station system controller 23A of the present invention on the remote station electric camera 11A. Fig. 4 is a schematic illustration showing a state in which the screen frame 2 is set all over the screen 2. Fig. 5 is a schematic illustration showing operation in the case where the photographing position of the remote station electric camera 11A is moved by the correspondence control in which the command of MBE is used.

In Fig. 5, reference numeral 10 is a photographing range of the remote station electric camera 11A, reference numeral 10A is a photographing range of the remote station electric camera 11A which is being outputted onto the screen 1, reference numeral 10B is a photographing range of the remote station electric camera 11A moved when "the camera moving" button, by which the electric camera is moved right, is pressed once, and reference numeral 10C is a photographing range of the remote station electric camera 11A moved when "the camera moving" button, by which the electric camera is moved downward, is pressed once.

Referring to Figs. 1 to 5, operation will be explained below. First, referring to Fig. 2, camera controlling operation conducted in the local station system controller 23A will be explained as follows. The camera rotation controlling section 205A is controlled by a control signal sent from the system control section 200A. A zooming signal is sent to the camera section 25 via the camera control signal converting section 251A. Data for movement corresponding to an amount of rotational movement is outputted into the rotational section 26A via the control signal converting section 251A.

Data for moving the rotational section 26A, which is outputted from the system controlling section 200A into the camera rotation controlling section 205A, is a relative value. Data for movement outputted from the system controlling section 200A is outputted to the camera control signal converting section 251A via the controller section 250A. Movement data inputted into the camera control signal converting section 251A is outputted to the rotational section 26A. A method of controlling an amount of zooming movement of the camera section 25 is the same as that shown in Fig. 9.

Next, referring to Fig. 3, operation of controlling the remote station electric camera 11A by the local station system controller 23A will be explained below. For example, when an operator (not shown in the drawing) operates "the remote station controlling" button arranged in the remote controller 24 of the local station so that remote station control can be made valid, controlling operation to control the camera of the remote station is started in the system controlling section 200A (step 501), and the program proceeds to step 502. In step 502, the system controlling section 200A demands of the remote station system controller 13A by the command of MBE that the remote station electric camera 11A is set at the widest angle, and the program proceeds to step 503. Due to the foregoing, an image of the widest angle, which has been photographed by the remote station electric camera 11A, is outputted on the local station monitor 22.

In step 503, the system controlling section 200A controls so that the screen frame 2 can be displayed all over the screen 1 by the action of the screen frame superimposing section 204 as shown in Fig. 4, and then the program proceeds to step 504. In step 504, in the case where the operator wants to photograph a portion not included in the image outputted on the screen 1, "the camera moving" button of the local station remote controller 24 is operated, so that the remote station electric camera 11 is moved. In this way, the photographing range of the remote station electric camera 11 is adjusted so that a portion, which the operator wants to photograph, can be photographed on the screen 1. In this case, the local station system controller 23A notifies the remote station system controller 13A of data of moving the rotational section of the remote station electric camera 21A. In this case, data of moving the rotational section is transmitted in a relative value by the command of MBE. In step 504, the program periodically proceeds to step 505, and it is judged whether of not "the zooming" button is pressed.

That is, in step 505, when "the zooming" button has been pressed in the process of step 504, the program proceeds to step 506. When "the zooming" button has not been pressed in the process of step 504, processing of step 504 is continued. Referring to Fig. 5, processing conducted in step 504 will be explained in detail. For example, in the case where the photographing range of the remote station electric camera 11A is 10A shown in the drawing when the program proceeds to step 504, "the camera moving" button, by which the electric camera is moved right, is pressed once. Then, data for moving the electric camera corresponding to the pressing operation conducted once is outputted from the local station system controller 23A into the remote station system controller 13A, and the photographing range of the remote station electric camera 11A is moved from 10A to 10B as shown in Fig. 5. In this connection, an amount of data for movement obtained when the button is pressed once is larger than that obtained when the local station camera is controlled. For example, the amount of data for movement is set so that about 1/3 of the screen can be moved when the button is pressed once. In the case where the photographing range of the remote station electric camera 11A is 10A, "the camera moving" button, by which the electric camera is moved downward, is pressed once. Then, as shown in Fig. 5, the photographing range of the remote station electric camera 11A is moved from 10A to 10C by the same operation as that describe above.

Due to the foregoing, the photographing position of the remote station electric camera 11A can be easily moved to a position close to the center of the screen of the local station monitor 22. On the other hand, according to the conventional device, the remote station electric camera 11A is moved in proportion to the time in which "the camera moving" button is pressed, and due to the delay of transmission of an image, it requires a skill to move the photographing position of the remote station electric camera 11A to a position close to the center of the screen of the local station monitor 22.

In step 506, the system controlling section 200A designates a photographing position and a photographing range in an image outputted on the screen 1 which has been photographed by the remote station electric camera 11 when the screen frame 2 is reduced/extended by "the zooming" button and "the camera moving" button provided in the local station remote controller 24. In this case, even when the screen frame 2 is moved to a corner of the screen 1 and "the camera moving" button is continuously pressed in the same manner as that conducted in step 406 in Fig. 10, the photographing position of the local station electric camera 11 is not moved by the correspondence with the remote station system controller 13 by the command of MBE.

In step 506, the system controlling section 200A judges whether or not "the setting" button is pressed while the program periodically proceeds to step 507. That is, in step 507, when "the setting" button is pressed in the process of step 506, the program proceeds to step 508. When "the setting" button is not pressed in the process of step 506, the processing of step 506 is continued. In step 508, the camera control arithmetic section 210 conducts arithmetic operation of the data for movement of the rotational section of the remote station electric camera 11A and arithmetic operation of the amount of zooming to be notified to the remote station controller 13A according to a relative position of the photographing position and photographic range determined by the screen frame 2 designated in step 506 with respect to the central coordinates of the screen 1. Then, the program proceeds to step 509. In step 509, the system controlling section 200A notifies the remote station system controller 13A by the command of MBE, of the amount of zooming and the data of movement of the rotational section calculated in step 508. Due to the foregoing, the image sent from the remote station electric camera 11A is outputted onto the screen 1, and the program proceeds to step 510. In step 510, "the zooming" button and "the camera moving" button are used, and the remote station electric camera 11A is directly operated by the correspondence with the remote station system controller 13A by the command of MBE, so that the photographing position and the photographing range are adjusted. In step 510, the program periodically proceeds to step 511, and it is judged whether or not "the setting" button is pressed. That is, in step 511, when "the setting" button is pressed in the process of step 510, the program proceeds to step 512, and operation is completed. When "the setting" button is not pressed in the process of step 510, the processing of step 510 is continued.

As described above, according to the present invention, the remote station electric camera 11A is controlled by the system controlling section 200A as shown in Fig. 3. There is no step which branches according to the time in which the predetermined button is pressed.

Control is conducted in the order of the first processing group (steps 502 to 505), the second processing group (steps 506 and 507), the third processing group (steps 508 and 509), and the fourth processing group (steps 510 and 511). In the first processing group (steps 502 to 505), the photographing position of the remote station electric camera 11A is determined by the communication control by the command of MBE in a period of time from pressing "the remote station control" button to pressing "the zooming" button. In the second processing group (steps 506 and 507), the photographing position and the photographing range are set by the screen frame 2 on the screen 1 onto which an image sent from the remote station electric camera 11A is outputted in a period of time from pressing "the zooming" button to pressing "the setting" button. In the third processing group (steps 508 and 509), the photographing position and the photographing range of the remote station electric camera 11A, which have been set in the second processing group by pressing "the setting" button, are outputted onto the screen 1. In the fourth processing group (steps 510 and 511), the remote station electric camera 11A is directly controlled when the photographing position and the photographing range are directly operated until "the setting" button is pressed. When the first, the second, the third and the fourth processing group are successively controlled in this order, no process branches and reverses. Due to the foregoing, a controlling state can be easily recognized during the operation. Therefore, the operation property can be enhanced.

In the process of arithmetic operation conducted in step 508, the system controlling section 200A outputs a relative value of the data of movement of the rotational section of the remote station camera 11. That is, it is unnecessary to conduct the conventional operation in which the system controlling section 200A in the local station system controller 23A calculates the positional data of the remote station electric camera 21A and an absolute value of the new position data is outputted. Therefore, a load given to the system controlling section 200A can be reduced.

As shown in Fig. 5, in the processing of step 504, the system controlling section 200A moves the photographing range of the remote station electric camera 11A displayed on the screen 1 by a predetermined amount of movement each time "the camera" moving button is pressed. Therefore, even when a delay of transmission is caused in the transmission line 30, the photographing range can be adjusted according to the operation conducted by the operator. Accordingly, the operation property can be enhanced.

In the processing shown in Fig. 3, in step 503, the screen frame 2 is displayed so that the screen frame 2 can be extended all over the screen 1, however, according to preference of the operator, the processing of step 503 may be conducted after "the zooming" button has been pressed in step 505.

In step 506 shown in Fig. 3, the operating property can be enhanced when control is conducted as shown in Fig. 6. Fig. 6 is a schematic illustration showing an operating method of operating a screen frame displayed on a screen in step 504. In Fig. 6, reference numeral 2A is a screen frame. In the same manner as that of the screen 2, the screen frame 2A is extended/reduced by the operation of "the zooming" button, and the screen frame 2A is moved by the operation of "the camera moving" button. A different point between the screen frame 2A and the screen frame 2 is that the screen frame 2A can be moved exceeding a corner of the screen 1 except for a portion as shown in Fig. 6. This can be realized when at least one of the screen frames 2A, in which the screen superimposing section 207 is arranged in the upper, lower, right and left portion, exists on the screen 1 so that it can be moved. Calculation of the data of movement of the rotational section 26A caused by the screen frame 2A in step 508 can be realized when the processing conducted in the camera control arithmetic section 210 is changed, for example, a virtual screen larger than the screen 1 is set and when the arithmetic operation of data of movement is conducted. Due to the foregoing, the photographing position that can be set in step 506 is extended, and the operation property can be enhanced.

### INDUSTRIAL APPLICABILITY

As described above, in the camera controlling device of the present invention, the first processing group, the second processing group and the third processing group are successively operated in order. In the first processing group, the remote station camera controlling means makes the photographing range of the remote station camera to be the widest angle. In the second processing group, the remote station camera is moved according to the remote station image of the widest angle displayed on the local station monitor by the first processing group. In the third processing group, the photographing position and the photographing range of the remote station camera are designated by the screen frame displayed on the local station monitor in the photographing range of the remote station camera moved by the second processing group described above. Therefore, it is possible for the operator to recognize a state of control of the device in his feeling. Therefore, the operating property of camera control can be enhanced.

In the camera controlling device of the present invention, when the remote station camera controlling means designates a photographing position of the remote station camera, designation is conducted by a relative value of the photographing position of the remote station camera. Therefore, it is unnecessary for the local station to conduct arithmetic operation of a new absolute value by adding an amount of movement to the absolute value of the photographing position of the remote station camera or by subtracting an amount of movement from the absolute value of the photographing position of the remote station camera. Accordingly, a load given to the control of the remote station camera can be reduced.

In the camera controlling device of the present invention, when the remote station camera is moved by the second processing group, the camera is moved by a predetermined amount each time the local station side operating means is operated. Accordingly, it is possible for the operator to move the remote station camera to a desired photographing position. Therefore, the operation property of the remote station camera can be enhanced.

In the camera control device of the present invention, the screen frame displayed by the third processing group can be moved exceeding the screen of the monitor of the local station except for a portion. Therefore, it is possible to extend the photographing range. Therefore, the operation property of the remote station camera can be enhanced.

Further, in the camera control device of the present invention, the screen frame is displayed by the third processing group. Accordingly, it is easy for the operator to recognize that the operation has entered the third processing group. Therefore, the operation property of the remote station camera can be enhanced.

## Claims

1. A camera control device comprising:
a camera of a remote station for photographing a desired position and range so as to output a remote image;
a system controller for compressing the remote image and transmitting it to a transmission line;
a system controller of a local station for expanding the remote image transmitted via the transmission line;
a monitor of the local station for displaying the remote image;
a superimposing display section for displaying a screen frame capable of designating a photographing position and a photographing range of the camera of the remote station on the monitor of the local station;
a local station side operating means for operating the camera of the remote station by the local station; and
a remote station camera control means for controlling the camera of the remote station by the local station side operating means via the transmission line, wherein
a first processing group for making a photographing range of the remote station camera to be the widest angle,
a second processing group for moving the remote station camera according to a remote image of the widest angle displayed on the local station monitor by the first processing group, and
a third processing group for designating the photographing position and the photographing range of the remote station camera by a screen frame displayed on the local station monitor in the photographing range of the remote station camera moved by the second processing group, are successively operated in order.

2. A camera control device according to claim 1, wherein when the remote station camera control means designates a photographing position of the remote station camera, designation is made by a relative value of the photographing position of the remote station camera.

3. A camera control device according to claim 1, wherein when the remote station camera is moved by the second processing group, the remote station camera is moved by a predetermined amount each time the local station side operating means is operated.

4. A camera control device according to claim 1, wherein when the remote station camera control means designates a photographing position of the remote station camera, designation is made by a relative value of the photographing position of the remote station camera, and when the remote station camera is moved by the second processing group, a predetermined amount of movement is made each time the local station side operating means is operated.

5. A camera control device according to claim 1, wherein the screen frame displayed by the third processing group can be moved exceeding the screen of the local station monitor except for a predetermined section.

6. A camera control device according to claim 1, wherein when the remote station camera control means designates a photographing position of the remote station camera, designation is made by a relative value from the photographing position of the remote station camera, and the screen frame displayed in the third processing group can be moved exceeding the screen of the local station monitor except for a predetermined section.

7. A camera control device according to claim 1, wherein when the remote station camera is moved in the second processing group, the remote station camera is moved by a predetermined amount each time the local station side operating means is operated, and the screen frame displayed by the third processing group can be moved exceeding the screen of the local station monitor except for a predetermined section.

8. A camera control device according to claim 1, wherein when the remote station camera control means designates a photographing position of the remote station camera, designation is made by a relative value of the photographing position of the remote station camera, and when the remote station camera is moved by the second processing group, a predetermined amount of movement is made each time the local station side operating means is operated, and the screen frame displayed by the third processing group can be moved exceeding the screen of the local station monitor except for a predetermined section.

9. A camera control device according to claim 1, wherein the screen frame is displayed by the third processing group.

10. A camera control device according to claim 1, wherein when the remote station camera control means designates a photographing position of the remote station camera, designation is made by a relative value of the photographing position of the remote station camera, and the screen frame is displayed by the third processing group.

11. A camera control device according to claim 1, wherein when the remote station camera is moved by the second processing group, the remote station camera is moved by a predetermined amount each time the local station side operating means is operated, and the screen frame is displayed by the third processing group.

12. A camera control device according to claim 1, wherein the screen frame displayed by the third processing group can be moved exceeding the screen of the local station monitor except for a predetermined section, and the screen frame is displayed by the third processing group.

13. A camera control device according to claim 1, wherein when the remote station camera control means designates a photographing position of the remote station camera, designation is made by a relative value of the photographing position of the remote station camera, and when the remote station camera is moved by the second processing group, a predetermined amount of movement is made each time the local station side operating means is operated, and the screen frame is displayed by the third processing group.

14. A camera control device according to claim 1, wherein when the remote station camera control means designates a photographing position of the remote station camera, designation is made by a relative value of the photographing position of the remote station camera, and the screen frame displayed by the third processing group can be moved exceeding the screen of the local station monitor except for a predetermined section, and the screen frame is displayed by the third processing group.

15. A camera control device according to claim 1, wherein when the remote station camera is moved by the second processing group, the remote station camera is moved by a predetermined amount each time the local station side operating means is operated, and the screen frame displayed by the third processing group can be moved exceeding the screen of the local station monitor except for a predetermined section, and the screen frame is displayed by the third processing group.

16. A camera control device according to claim 1, wherein when the remote station camera control means designates a photographing position of the remote station camera, designation is made by a relative value of the photographing position of the remote station camera, and when the remote station camera is moved by the second processing group, a predetermined amount of movement is made each time the local station side operating means is operated, and the screen frame displayed by the third processing group can be moved exceeding the screen of the local station monitor except for a predetermined section, and the screen frame is displayed by the third processing group.
